# EUROPEAN PATENT SPECIFICATION

(11) **EP 3 790 731 B1**
(45) Date of publication and mention of the grant of the patent: **10.12.2025**
(21) Application number: 19723754.8
(22) Date of filing: 08.05.2019
(51) Int. Cl.: B29C 71/02, B29C 70/52, B29B 15/12

(54) **METHOD FOR POST-CURING A PROFILE OF FIBRE-REINFORCED PLASTIC MATERIAL, FIBRE REINFORCED PROFILE AND ITS USE**
VERFAHREN ZUR NACHHÄRTUNG EINES PROFILS AUS FASERVERSTÄRKTEM KUNSTSTOFFMATERIAL, FASERVERSTÄRKTES PROFIL UND DESSEN VERWENDUNG
PROCÉDÉ DE POST-DURCISSEMENT D'UN PROFILÉ DE MATÉRIAU PLASTIQUE RENFORCÉ PAR DES FIBRES

(30) Priority: 08.05.2018 NL 2020895
(43) Date of publication of application: 17.03.2021
(73) Proprietor: D.P.P. Beheer B.V., 5047 TW Tilburg (NL)
(72) Inventor: VAN DIJK, Maarten Laurens, 5047TW Tilburg (NL); LUCASSEN, Roel, 5047TW Tilburg (NL)
(74) Representative: Fuchs Patentanwälte Partnerschaft mbB
(86) International application number: PCT/EP2019/061837
(87) International publication number: WO 2019/215241

(56) References cited:
- EP-A2- 0 056 689
- EP-A2- 0 384 063
- EP-A2- 2 341 239
- WO-A1-2015/082613
- DE-A1- 102017 215 921
- "Pultrusion process of the bismaleimide resin BMI-QC130", ACTA METALLURGICA SINICA (ENGLISH LETTERS), vol. 26, 1 October 2009 (2009-10-01), College of Materials Science and technology, Nanjing University of Aeronautics and Astronautics, Nanjing 210016, China, pages 20 - 26, XP002793949, ISSN: 1000-3851
- MOURITZ A P: "Compression properties of z-pinned sandwich composites", JOURNAL OF MATERIALS SCIENCE, KLUWER ACADEMIC PUBLISHERS, BO, vol. 41, no. 17, 13 May 2006 (2006-05-13), pages 5771 - 5774, XP019399045, ISSN: 1573-4803, DOI: 10.1007/S10853-006-0114-8

## Description

The present invention relates to a method for post-curing a profile of fibre-reinforced plastic material.

It is known for profiles with a length of, for example, 1 or 2 metres, wherein said profiles are manufactured by the pultrusion process and their thermosetting matrix material is already partially cured in a heated die of the pultrusion machine during the pultrusion process, to be post-cured in an oven. By post-curing, the profile can be made more suitable for later applications at elevated temperatures, for example above 150°C. The applications in question may for example take place in a subsequent production process wherein the pultruded profile is processed as a semi-finished product at an elevated temperature. The known heat treatment has the result that the glass-transition temperature of the matrix material is increased. EP 0 056 689 A2 discloses method for post-curing a profile of fibre-reinforced plastic material comprising the steps of supplying the profile, wherein the profile is wound round a winding body and said profile comprises a number of fibres extending along one another, which are embedded in a partially cured thermosetting matrix material, and by means of a heat treatment device, carrying out a heat treatment on the profile while the profile is wound round the winding body, and during said heat treatment the matrix material is post-cured.

The present invention aims to provide an improved method with which it is possible to produce profiles more efficiently, in particular (but not exclusively) to produce profiles in which the matrix material has an increased glass-transition temperature, for example a glass-transition temperature of at least 100°C. In addition, the present invention discerns that there is a market for pultruded profiles that have a relatively large length of, for example, tens or hundreds of metres. There may, for example, be an important advantage in that profiles of such lengths may be processed with a minimum amount of waste or that, broadly speaking, there can be continuous supply of the profile material to a production machine.

Within the context of the aforementioned aims, the method according to the present invention is defined in claim 1.

The present invention is based moreover on the discernment that despite limited, incomplete, curing of the matrix material of the profile, it is possible to wind the profile around a winding body and then carry out a heat treatment on the wound profile, wherein further curing of the matrix material occurs, but without stresses that developed in the profile as a result of winding the profile round the winding body leading to permanent deformation of the profile after the heat treatment. This is achieved because the temperature to which the profile is exposed during the heat treatment remains below the glass-transition temperature, and said glass-transition temperature increases as a result of the heat treatment. The above reference to stress-free state is aimed at the situation in which the profile is unwound from the winding body after the heat treatment.

The present invention thus makes it possible to produce fibre-reinforced plastic profiles efficiently with relatively large lengths, for example hundreds of metres, and optionally with a relatively high glass-transition temperature.

The present invention is suitable in particular, but not exclusively, for application in the production of profiles which, in the stress-free state, extend linearly in the longitudinal direction thereof.

It may be advantageous if, for step a, the method according to the present invention comprises the step of winding the profile on the winding body. Winding the profile around the winding body may also be carried out at another location, for example in another factory, in another town or in another country, and by another party than at the location where the heat treatment takes place and than by the party carrying out the heat treatment.

The present invention is suitable in particular for application with pultruded profiles. Consequently, in a possible embodiment of the method according to the present invention, the profile is manufactured by a pultrusion process and step a comprises the steps of:
a-1 pulling fibres from a fibre supply unit by means of a pulling device,
a-2 applying the matrix material around the fibres by means of an applicator,
a-3 after step a-2, pulling the fibres pulled from the fibre supply unit through a heated die for partial curing of the matrix material in the die and shaping of the profile,
a-4 after step a-3, winding the profile on the winding body.

In order to make it possible for the location where the profile is wound around a winding body and the location where the heat treatment takes place to be different from one another, wherein for example transport of the profile when wound round the winding body from one location to the other location is necessary, the method according to the present invention may comprise the step of applying a separation in the partially cured profile at a position between the winding body and the heated die.

Alternatively, the present invention also offers the possibility for the profile to be continuous from the fibre supply unit to the heat treatment device.

A suitable manner of embedding the fibres in the matrix material may be obtained if the applicator according to step a-2 of the present invention comprises a bath for the matrix material in liquid form and the fibres pulled from the fibre supply unit are pulled through the liquid matrix material in the bath or if the applicator according to step a-2 comprises a bath for the matrix material in powder form and the fibres pulled from the fibre supply unit are pulled through the matrix material brought into a fluidized state.

An effective and efficient heat treatment of the profile may be obtained if the winding body with the profile wound around it is put in an oven during the heat treatment.

It was found that the heat treatment may be particularly effective if the heat treatment lasts at least 4 hours, more preferably at least 8 hours.

To promote the increase in the glass-transition temperature, it may be preferable for the heat treatment device to be controlled during the heat treatment in such a way that the temperature to which the profile is exposed during the heat treatment increases, in particular if the highest temperature to which the profile is exposed during the heat treatment is reached not earlier than 1.5 hours after the start of the heat treatment.

For increasing the glass-transition temperature it may further be advantageous if the highest temperature to which the profile is exposed during the heat treatment is at least 100°C, preferably at least 150°C, and more preferably at least 200°C.

The optimum settings of the aforementioned parameters will also depend on the dimensions of the profile and the nature of the matrix material used.

The profile may have favourable mechanical properties if the fibres are of carbon, glass, basalt, aramid or an oriented polymer. The fibres may for example be of quartz glass or E-glass. E-glass is alumina-lime-silicate glass that contains less than 1% w/w of alkali oxides. Especially favourable profile properties are obtained if the fibres are of carbon and/or a combination of quartz glass and aramid.

The profile may be very suitable for applications at elevated temperature, for example at 200°C if the matrix material is a bismaleimide resin. Other suitable profiles may be obtained if the matrix material is an epoxy, polyester, vinyl ester, phenolic, polyurethane or silicone resin. Furthermore, it has been discerned that profiles suitable for medical use may be obtained according to the present invention if the matrix material is an epoxy resin with a glass-transition temperature of at least 150°C.

In order to limit or prevent the development of internal mechanical stresses in the profile on account of thermal expansion of the winding body, the latter is preferably made of a material with a coefficient of thermal expansion less than 2.5 · 10⁻⁶ K⁻¹. A suitable material is for example INVAR, which is a nickel-iron alloy with 64% iron, 35-36% nickel and small percentages of other elements such as manganese, carbon, chromium, magnesium, silicon and cobalt.

To prevent permanent deformation of the profile it may be advantageous for the windings of the profile round the winding body to be next to each other, in particular if the windings of the profile round the winding body do not touch each other. Mutual adhesion and/or damage of windings may thus also be avoided.

It may be advantageous, especially if the profiles are further processed at a location other than where they are produced, if the method according to the present invention comprises the further steps of
c unwinding the profile from the winding body after step b and
d winding the profile on an other winding body after step c.

For transporting the profile it may then be possible to use a lower-grade winding body ("other winding body") than the winding body that is used during steps a, b and c.

It is then preferable if the other winding body according to step d has a smaller diameter than the winding body according to step c. The diameter of the winding body that is used during steps a, b and c may be adapted to the maximum bending that the profile can undergo during winding thereof around the winding body without breaking and optionally, for example, to the space that is available in an oven. The diameter of the other winding body may then be selected as smaller because the heat treatment has had the effect that the profile can withstand higher bending stresses. The property that the other winding body has a smaller diameter leads to the advantage that the other winding body with the profile wound thereon requires less space for example during storage and transport. The fibres of the profile manufactured by means of the method according to the invention may be of quartz glass and/or aramid and the matrix material of said profile may be an epoxy resin with a glass-transition temperature of at least 150°C. It has been discerned that such a profile has especially favourable properties for medical applications, for example application as reinforcing material in a thermoplastic material, such as for guide-wires in minimally invasive surgery. Preferably the profile has a diameter of at most 0.5 millimetre.

The present invention is explained in more detail hereafter, referring to the figure, based on the description of a production line with which the methods according to the invention can be applied, and of the method itself.

Accordingly, preferred embodiments of the present invention will now be described, by way of example only, with reference to the accompanying drawing, in which:

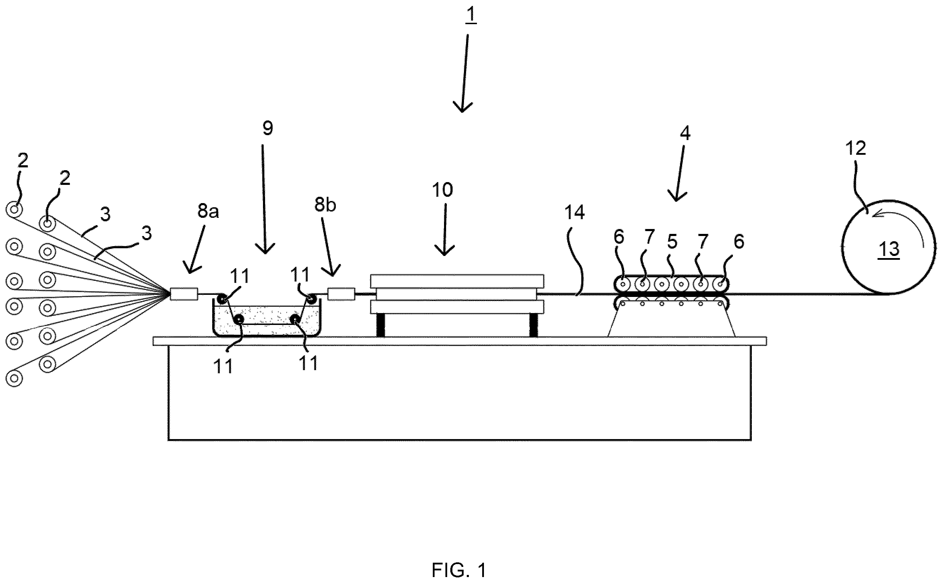

Figure 1 is a schematic illustration of a pultrusion line according to the present invention.

The figure, Figure 1, shows a pultrusion line 1 such as may be employed when carrying out a method according to the invention. Pultrusion line 1 comprises a number of winding bodies made in the form of bobbins 2 with rovings 3 wound thereon. Rovings are bundles of fibres, said fibres for example being of carbon or glass.

The pultrusion line 1 comprises a pulling device 4 with which the rovings 3 are pulled from the bobbins 2. In this example the pulling device comprises two endless belts 5. Each of the belts 5 is looped round two rotating members 6. A number of pressure rollers 7 are provided between the two rotating members. The rotating members 6 and the pressure rollers 7 belonging to the two belts 5 are directly opposite each other and incline, and/or are urged, towards each other under spring tension.

Downstream relative to the bobbins 2, the pultrusion line 1 comprises an alignment body 8a. Holes in the alignment body 8a position the rovings 3 at desired positions relative to, and at a distance from, each other.

Downstream relative to alignment body 8a, a bath 9 is provided. The bath 9 has four guide rolls 11, past which the rovings are led through matrix material in the form of liquid resin material in bath 9. The liquid resin is thus applied round each of the rovings 3.

Downstream relative to the bath 9, pultrusion line 1 is provided with a second alignment body 8b. Holes in the second alignment body 8b ensure that the rovings 3, on being enveloped in resin material, are maintained at the desired mutual positions after the bath 9. The pattern of holes in the second alignment body 8b does not have to be exactly identical to the pattern of holes in the first alignment body 8a.

The die orifice of the heated die 10 provided downstream relative to the second alignment body 8b has the shape of the profile 14 to be produced. The heating of the die 10 ensures that the resin is partially cured in the die 10 so that the profile 14, as it emerges downstream of the die, can be gripped by turns, e.g. two turns, of the belts 5 opposite to each other so that the pulling device 4 can pull the profile 14 forwards, thereby also, as stated earlier, pulling the rovings 3 from the bobbins 2.

Downstream of the pulling device 4 and aligned therewith, a winding device 12 is provided, with a winding body in the form of a spool 13. The spool 13 is made of a nickel-iron alloy that is also well known as INVAR and has a coefficient of thermal expansion of 1.2 · 10⁻⁶ K⁻¹. In use, the profile 14 is wound by the winding device 12 on the spool 13, for example in lengths of tens to hundreds of metres. For this purpose, a separation is applied in profile 14 between spool 13 and pulling device 4, for example by means of shears or a saw. The diameter of the spool 13, and the heating of the profile 14 in the die 10, are selected and/or matched to one another so that the profile 14 can withstand both the bending of the profile 14 that is necessary for winding, and the heat treatment that comes next.

In the next step, the spool 13 with the profile 14 wound round it is put in an oven for further curing to obtain the desired mechanical and thermal properties. The glass-transition temperature of the matrix material is increased as a result of this heat treatment.

An example of a possible embodiment of the method according to the present invention is described hereafter:
A number of rovings 3 with carbon fibres are pulled by the pulling device 4 with a speed of, for example, between 0.8 metre per minute and 1.4 metres per minute, through the heated die 10. In bath 9 there is a resin, for example a high-grade resin based on bismaleimide. The rovings 3 are led through bath 9 and are formed in die 10 to a round shape (cross-section), wherein the rovings 3 are located at least essentially at a regular distance from each other and they are surrounded by the resin. In the die, the resin is partially cured at a temperature of approx. 180°C, and a pultruded round profile is formed. The profile is wound with the winding device 12 on the spool 13, wherein the windings of the profile are located next to each other and are completely free from one another. After a desired length of the profile is wound on the spool, the profile 14 is sawn or cut through, between the pulling device 4 and the winding body 13. Winding the profile 14 around the spool 13 causes mechanical stresses in the profile 14. These mechanical stresses ensure that, in the hypothetical case where, directly after winding the profile 14, the profile were to be unwound from the spool 13 again, it would in the stress-free state assume the shape that the profile would have in a stress-free state preceding winding round the spool 13. A stress-free state could be obtained by separating a limited length of the profile 14, for example a length of, for example, 1 or 2 metres, and laying it on a flat substrate. In this stress-free state the profile can extend linearly in the longitudinal direction thereof.

In the next step of the production process according to the present invention, spool 13 with the profile wound round it is put in an oven and heated therein. At the start of the heat treatment, the glass-transition temperature of the matrix material, i.e. of the resin partially cured in die 10, may typically be for example 120°C. A possible heating profile is, for example, stepwise heating, wherein for example in a period of 4 hours the oven is heated from room temperature, or in any case from a temperature below 120°C, to a temperature of 190°C. As the temperature in the oven rises, the glass-transition temperature of the profile, more specifically of the matrix material thereof, also increases, for example to 220°C. During the temperature rise in the oven, the temperature in the oven remains in every case lower than the glass-transition temperature of the matrix material, which also increases. After the aforementioned highest temperature is reached in the oven, this temperature is maintained for 8 hours. During this period the glass-transition temperature increases even further, for example to 250°C.

The temperature to which the profile 14 is exposed in the oven always remains below the glass-transition temperature of the resin during the heat treatment, and said glass-transition temperature increases as a result of the heat treatment. The thermal expansion of the spool 13 is such that this does not lead to extra (tensile) stresses in the profile 14. Extra stresses of this kind could lead to permanent deformation of the profile 14.

Next, cooling of the profile to room temperature takes place. This cooling may take place partially or completely in the oven, but also may be completely outside of it. After this heat treatment, a further curing of the resin has occurred. The present invention is not, however, limited to this heating profile - it also depends on the composition of the resin used.

If the profile 14 were to be unwound from the spool 13 after the heat treatment and were to be made stress-free, then the profile 14 would have the same cross-section and radius of curvature as the profile 14 had in the stress-free state directly prior to the heat treatment. The foregoing reference to radius of curvature does not suggest that there must always be a question of a definite curvature. Within the context of the present invention, the profile preferably expands linearly in its longitudinal direction in the stress-free state. Because the temperature to which the profile 14 is exposed during the heat treatment remains below the (increasing) glass-transition temperature of the matrix material, the mechanical stresses that develop in the profile 14 on account of winding the profile 14 round the spool 13 will not undergo relaxation.

After the heat treatment, the profile 14 is unwound from spool 13 and wound onto another, lower-grade, spool ("other winding body") with a smaller diameter, for further transport and processing.

The present invention is explained above, by way of example only, on the basis of an example with a profile that has bismaleimide resin as matrix material. The present invention may, however, also be applied advantageously for producing profiles with a lower-grade matrix material, for example based on an epoxy resin. Such profiles can then be pultruded at a relatively high pultrusion speed, for example a speed of between 1.75 metres per minute and 2.75 metres per minute, without requiring a longer heated die. Owing to the relatively short residence time in the heated die, the resultant cure will still be incomplete. Then, by winding the pultruded profile onto a winding body and then subjecting the profile, wound round the winding body, to a further heat treatment, for example in an oven, further curing of the matrix material may take place, wherein in addition the profile becomes available in a single long length of, for example, some hundreds of metres.

In a particular embodiment according to the present invention, it is also possible for the steps of applying the resin round the rovings, and then winding thereof round a spool, to be carried out at some other location, for example by some other company, than the location where the heat treatment is carried out.

The present invention has been described above as having beneficial application in a medical device or application incorporating a profile manufactured according to the present invention. This is just one example, and the present invention also has beneficial application in civil engineering, automotive, marine, aeronautical and space applications, where profiles manufactured according to the present invention provide advantages over prior art profiles when used in apparatus, devices, parts, structures and manufacturing, building or assembly processes in these fields.

Accordingly, whilst preferred embodiments of the present invention have been described above and illustrated in the drawing, these are by way of example only and non-limiting. It will be appreciated by those skilled in the art that many alternatives are possible within the ambit and scope of the invention, as set out in the appended claims.

## Claims

1. A method for post-curing a profile (14) of fibre-reinforced plastic material comprising the steps of:
a supplying the profile (14), which profile (14) adopts a configuration in the longitudinal direction thereof when in a natural, relaxed or stress-free state, in a non-linear configuration such that stresses are present in the profile (14) not otherwise present when in the natural, relaxed or stress-free state, and wherein said profile (14) comprises a number of fibres extending along one another, which are embedded in a partially cured thermosetting matrix material; and
b by means of a heat treatment device, carrying out a heat treatment on the profile (14) while the profile (14) is in a non-linear configuration in the longitudinal direction thereof, and during said heat treatment the matrix material is post-cured, wherein the glass-transition temperature of the matrix material is increased as a result of the heat treatment and wherein the temperature to which the profile (14) is exposed during the heat treatment remains below the glass-transition temperature during the heat treatment.

2. A method according to claim 1, wherein the profile expands linearly in the stress-free state in the longitudinal direction thereof, and/or the profile extends linearly in the stress-free state in the longitudinal direction thereof.

3. A method according to any one of the preceding claims, wherein the method comprises, for step a, the step of winding the profile on the winding body.

4. A method according to any one of claims 1 or 2, wherein the profile is manufactured by a pultrusion process and step a comprises the steps of:
a-1 pulling fibres from a fibre supply unit by means of a pulling device;
a-2 applying the matrix material round the fibres by means of an applicator;
a-3 after step a-2, pulling the fibres pulled from the fibre supply unit through a heated die for partial curing of the matrix material in the die and shaping of the profile;
a-4 after step a-3, winding the profile on the winding body.

5. A method according to claim 4, wherein the method comprises the step of applying a separation in the partially cured profile at a position between the winding body and the heated die.

6. A method according to Claim 4, wherein the profile is continuous from the fibre supply unit to the heat treatment device.

7. A method according to any one of claims 4 to 6, wherein the applicator comprises a bath for the matrix material in liquid form and the fibres pulled from the fibre supply unit are pulled through the liquid matrix material in the bath.

8. A method according to any one of claims 4 to 6, wherein the applicator comprises a bath for the matrix material in powder form and the fibres pulled from the fibre supply unit are pulled through the matrix material brought into a fluidized state.

9. A method according to any one of the preceding claims, wherein the winding body with the profile wound round it is put in an oven during the heat treatment.

10. A method according to any one of the preceding claims, wherein the heat treatment lasts at least 4 hours, more preferably at least 8 hours.

11. A method according to any one of the preceding claims, wherein the heat treatment device is controlled in such a way during the heat treatment that the temperature to which the profile is exposed during the heat treatment increases.

12. A method according to any one of the preceding claims, wherein the highest temperature to which the profile is exposed during the heat treatment is at least 100°C, preferably at least 150°C and more preferably at least 200°C.

13. A method according to any one of the preceding claims, **characterised in that** the highest temperature to which the profile is exposed during the heat treatment is reached not earlier than 1.5 hours after the start of the heat treatment.

14. A method according to any one of the preceding claims, wherein the fibres comprise any one or more of carbon, glass, basalt, aramid or an oriented polymer.

15. A method according to any one of the preceding claims, wherein the matrix material comprises any one or more of an epoxy, polyester, vinyl ester, phenolic, polyurethane or silicone resin, preferably a bismaleimide resin.

16. A method according to any one of the preceding claims, wherein the winding body is made of a material with a coefficient of thermal expansion less than 2.5 · 10⁻⁶ K⁻¹.

17. A method according to any one of the preceding claims, wherein the windings of the profile round the winding body lie next to each other.

18. A method according to any one of the preceding claims, wherein the windings of the profile round the winding body do not touch each other.

19. A method according to any one of the preceding claims comprising the further steps of:
c after step b, unwinding the profile from the winding body and
d after step c, winding the profile onto an other winding body.

20. A method according to claim 19, wherein the other winding body according to step d has a smaller diameter than the winding body according to step c.

21. A method according to claim 1, wherein supplying the profile in a non-linear configuration comprises winding the profile around a winding body and wherein the stresses remain constant and the profile shape is retained both in cross-section as well as radius of curvature of the profile, at least in the stress-free state, despite the heat treatment and despite winding the profile round the winding body prior to the heat treatment.

22. A method according to claim 21, wherein, despite the heat treatment and despite the profile being in a non-linear configuration in the longitudinal direction thereof prior to and during the heat treatment, the shape of the profile prior to heat treatment is retained when in the natural, relaxed or stress-free state after heat treatment.

23. A method as claimed in claim 21 or claim 22 further comprising any one or more of the features recited in claims 2 to 20.

## Patentansprüche

1. Verfahren zur Nachhärtung eines Profils (14) aus faserverstärktem Kunststoffmaterial, die folgenden Schritte umfassend:
a Zuführen des Profils (14), wobei das Profil (14) eine Konfiguration in der Längsrichtung davon annimmt, wenn es sich in einer nicht linearen Konfiguration in einem natürlichen, entspannten oder spannungsfreien Zustand befindet, sodass Spannungen in dem Profil (14) vorhanden sind, die sonst nicht vorhanden sind, wenn es sich in dem natürlichen, entspannten oder spannungsfreien Zustand befindet, und wobei das Profil (14) eine Reihe von Fasern umfasst, die sich aneinander entlang erstrecken und in ein teilweise gehärtetes duroplastisches Matrixmaterial eingebettet sind; und
b mittels einer Wärmebehandlungsvorrichtung, Ausführen einer Wärmebehandlung an dem Profil (14), während sich das Profil (14) in einer nicht linearen Konfiguration in der Längsrichtung davon befindet und das Matrixmaterial während der Wärmebehandlung nachgehärtet wird, wobei die Glasübergangstemperatur des Matrixmaterials als Folge der Wärmbehandlung erhöht wird und wobei die Temperatur, der das Profil (14) während der Wärmebehandlung ausgesetzt ist, während der Wärmebehandlung unter der Glasübergangstemperatur bleibt.

2. Verfahren nach Anspruch 1, wobei sich das Profil in dem spannungsfreien Zustand linear in der Längsrichtung davon ausdehnt und/oder sich das Profil in dem spannungsfreien Zustand linear in der Längsrichtung davon erstreckt.

3. Verfahren nach einem der vorhergehenden Ansprüche, wobei das Verfahren, für Schritt a, den Schritt des Wickelns des Profils auf den Wicklungskörper umfasst.

4. Verfahren nach einem der Ansprüche 1 oder 2, wobei das Profil durch einen Pultrusionsprozess hergestellt wird und Schritt a die folgenden Schritte umfasst:
a-1 Ziehen von Fasern aus einer Faserzufuhreinheit mittels einer Zugvorrichtung;
a-2 Auftragen des Matrixmaterials um die Fasern mittels eines Applikators;
a-3 nach Schritt a-2, Ziehen der Fasern, die aus der Faserzufuhreinheit gezogen werden, durch eine erwärmte Matrize zum teilweisen Härten des Matrixmaterials in der Matrize und Formen des Profils;
a-4 nach Schritt a-3, Wickeln des Profils auf den Wicklungskörper.

5. Verfahren nach Anspruch 4, wobei das Verfahren den Schritt des Anwendens einer Trennung in dem teilweise gehärteten Profil an einer Position zwischen dem Wicklungskörper und der erwärmten Matrize umfasst.

6. Verfahren nach Anspruch 4, wobei das Profil aus der Faserzufuhreinheit zu der Wärmebehandlungsvorrichtung durchgehend ist.

7. Verfahren nach einem der Ansprüche 4 bis 6, wobei der Applikator ein Bad für das Matrixmaterial in flüssiger Form umfasst und die Fasern, die aus der Faserzufuhreinheit gezogen werden, durch das flüssige Matrixmaterial in dem Bad gezogen werden.

8. Verfahren nach einem der Ansprüche 4 bis 6, wobei der Applikator ein Bad für das Matrixmaterial in Pulverform umfasst und die Fasern, die aus der Faserzufuhreinheit gezogen werden, durch das flüssige Matrixmaterial gezogen werden, das in einen verflüssigten Zustand gebracht wurde.

9. Verfahren nach einem der vorhergehenden Ansprüche, wobei der Wicklungskörper, um den das Profil gewickelt ist, während der Wärmbehandlung in einen Ofen gelegt wird.

10. Verfahren nach einem der vorhergehenden Ansprüche, wobei die Wärmebehandlung mindestens 4 Stunden, weiter bevorzugt mindestens 8 Stunden dauert.

11. Verfahren nach einem der vorhergehenden Ansprüche, wobei die Wärmebehandlungsvorrichtung derart gesteuert wird, dass die Temperatur, der das Profil während der Wärmebehandlung ausgesetzt ist, während der Wärmebehandlung zunimmt.

12. Verfahren nach einem der vorhergehenden Ansprüche, wobei die höchste Temperatur, der das Profil während der Wärmebehandlung ausgesetzt ist, mindestens 100 °C, vorzugsweise mindestens 150 °C und weiter bevorzugt mindestens 200 °C beträgt.

13. Verfahren nach einem der vorhergehenden Ansprüche, **dadurch gekennzeichnet, dass** die höchste Temperatur, der das Profil während der Wärmebehandlung ausgesetzt ist, nicht früher als 1,5 Stunden nach Beginn der Wärmebehandlung erreicht wird.

14. Verfahren nach einem der vorhergehenden Ansprüche, wobei die Fasern eines oder mehrere von Kohlenstoff, Glas, Basalt, Aramid oder einem orientierten Polymer umfassen.

15. Verfahren nach einem der vorhergehenden Ansprüche, wobei das Matrixmaterial eines oder mehrere von einem Epoxid-, einem Polyester-, einem Vinylester-, einem Phenol-, einem Polyurethan- oder einem Siliconharz, vorzugsweise ein Bismaleimidharz umfasst.

16. Verfahren nach einem der vorhergehenden Ansprüche, wobei der Wicklungskörper aus einem Material mit einem Koeffizienten der Wärmeausdehnung von weniger als 2,5·10⁻⁶ K⁻¹ besteht.

17. Verfahren nach einem der vorhergehenden Ansprüche, wobei die Wicklungen des Profils, das um den Wicklungskörper gewickelt ist, nebeneinander liegen.

18. Verfahren nach einem der vorhergehenden Ansprüche, wobei sich die Wicklungen des Profils, das um den Wicklungskörper gewickelt ist, nicht berühren.

19. Verfahren nach einem der vorhergehenden Ansprüche, die folgenden weiteren Schritte umfassend:
c nach Schritt b, Abwickeln des Profils von dem Wicklungskörper und
d nach Schritt c, Wickeln des Profils auf einen anderen Wicklungskörper.

20. Verfahren nach Anspruch 19, wobei der andere Wicklungskörper gemäß Schritt d einen kleineren Durchmesser als der Wicklungskörper gemäß Schritt c aufweist.

21. Verfahren nach Anspruch 1, wobei das Zuführen des Profils in einer nicht linearen Konfiguration Wickeln des Profils um einen Wicklungskörper umfasst und wobei die Spannungen konstant bleiben und die Profilform sowohl im Querschnitt als auch im Krümmungsradius des Profils, zumindest in dem spannungsfreien Zustand, trotz der Wärmebehandlung und trotz der Wicklung des Profils um den Wicklungskörper vor der Wärmebehandlung beibehalten wird.

22. Verfahren nach Anspruch 21, wobei, trotz der Wärmebehandlung und trotz der nicht linearen Konfiguration des Profils in der Längsrichtung davon vor und während der Wärmebehandlung, die Form des Profils vor der Wärmebehandlung beibehalten wird, wenn es sich im natürlichen, entspannten oder spannungsfreien Zustand nach der Wärmebehandlung befindet.

23. Verfahren nach Anspruch 21 oder Anspruch 22, ferner umfassend eines oder mehrere der Merkmale nach den Ansprüchen 2 bis 20.

## Revendications

1. Procédé de post-durcissement d'un profilé (14) en matière plastique renforcée de fibres, comprenant les étapes suivantes :
a fournir le profilé (14), lequel profilé (14) adopte une configuration dans sa direction longitudinale lorsqu'il est à l'état naturel, relaxé ou sans contrainte, dans une configuration non linéaire de telle sorte que des contraintes soient présentes dans le profilé (14) qui ne sont pas présentes à l'état naturel, relaxé ou sans contrainte, et dans lequel ledit profilé (14) comprend un certain nombre de fibres s'étendant les unes à côté des autres, qui sont noyées dans un matériau matriciel thermodurcissable partiellement durci ; et
b à l'aide d'un dispositif de traitement thermique, réaliser un traitement thermique sur le profilé (14) tandis que le profilé (14) se trouve dans une configuration non linéaire dans sa direction longitudinale, et pendant ledit traitement thermique, le matériau matriciel est post-durci, dans lequel la température de transition vitreuse du matériau matriciel est augmentée à la suite du traitement thermique et dans lequel la température à laquelle le profilé (14) est exposé pendant le traitement thermique reste inférieure à la température de transition vitreuse pendant le traitement thermique.

2. Procédé selon la revendication 1, dans lequel le profilé se dilate linéairement à l'état sans contrainte dans sa direction longitudinale, et/ou le profilé s'étend linéairement à l'état sans contrainte dans sa direction longitudinale.

3. Procédé selon l'une quelconque des revendications précédentes, dans lequel le procédé comprend, pour l'étape a, l'étape consistant à enrouler le profilé sur le corps d'enroulement.

4. Procédé selon l'une quelconque des revendications 1 ou 2, dans lequel le profilé est fabriqué par un procédé de pultrusion et l'étape a comprend les étapes suivantes :
a-1 tirer des fibres à partir d'une unité d'alimentation en fibres au moyen d'un dispositif de traction ;
a-2 appliquer le matériau matriciel autour des fibres au moyen d'un applicateur ;
a-3 après l'étape a-2, tirer les fibres tirées de l'unité d'alimentation en fibres à travers une filière chauffée pour durcir partiellement le matériau matriciel dans la filière et façonner le profilé ;
a-4 après l'étape a-3, enrouler le profilé sur le corps d'enroulement.

5. Procédé selon la revendication 4, dans lequel le procédé comprend l'étape consistant à appliquer une séparation dans le profilé partiellement durci à une position entre le corps d'enroulement et la filière chauffée.

6. Procédé selon la revendication 4, dans lequel le profilé est continu depuis l'unité d'alimentation en fibres jusqu'au dispositif de traitement thermique.

7. Procédé selon l'une quelconque des revendications 4 à 6, dans lequel l'applicateur comprend un bain pour le matériau matriciel sous forme liquide et les fibres tirées de l'unité d'alimentation en fibres sont tirées à travers le matériau matriciel liquide dans le bain.

8. Procédé selon l'une quelconque des revendications 4 à 6, dans lequel l'applicateur comprend un bain pour le matériau matriciel sous forme de poudre et les fibres tirées de l'unité d'alimentation en fibres sont tirées à travers le matériau matriciel amené dans un état fluidisé.

9. Procédé selon l'une quelconque des revendications précédentes, dans lequel le corps d'enroulement avec le profil enroulé autour de lui est placé dans un four pendant le traitement thermique.

10. Procédé selon l'une quelconque des revendications précédentes, dans lequel le traitement thermique dure au moins 4 heures, de préférence au moins 8 heures.

11. Procédé selon l'une quelconque des revendications précédentes, dans lequel le dispositif de traitement thermique est commandé de telle manière pendant le traitement thermique que la température à laquelle le profilé est exposé pendant le traitement thermique augmente.

12. Procédé selon l'une quelconque des revendications précédentes, dans lequel la température la plus élevée à laquelle le profilé est exposé pendant le traitement thermique est d'au moins 100°C, de préférence d'au moins 150 °C et plus préférentiellement d'au moins 200°C.

13. Procédé selon l'une quelconque des revendications précédentes, **caractérisé en ce que** la température la plus élevée à laquelle le profilé est exposé pendant le traitement thermique est atteinte au plus tôt 1,5 heure après le début du traitement thermique.

14. Procédé selon l'une quelconque des revendications précédentes, dans lequel les fibres comprennent un ou plusieurs des éléments suivants : carbone, verre, basalte, aramide ou un polymère orienté.

15. Procédé selon l'une quelconque des revendications précédentes, dans lequel le matériau matriciel comprend une ou plusieurs résines choisies parmi les résines époxy, polyester, vinylester, phénolique, polyuréthane ou silicone, de préférence une résine bismaléimide.

16. Procédé selon l'une quelconque des revendications précédentes, dans lequel le corps d'enroulement est réalisé dans un matériau ayant un coefficient de dilatation thermique inférieur à 2,5 .10⁻⁶K⁻¹.

17. Procédé selon l'une quelconque des revendications précédentes, dans lequel les enroulements du profilé autour du corps d'enroulement sont juxtaposés.

18. Procédé selon l'une quelconque des revendications précédentes, dans lequel les enroulements du profilé autour du corps d'enroulement ne se touchent pas.

19. Procédé selon l'une quelconque des revendications précédentes, comprenant les étapes supplémentaires suivantes :
c après l'étape b, dérouler le profilé du corps d'enroulement et
d après l'étape c, enrouler le profilé sur un autre corps d'enroulement.

20. Procédé selon la revendication 19, dans lequel l'autre corps d'enroulement selon l'étape d a un diamètre plus petit que le corps d'enroulement selon l'étape c.

21. Procédé selon la revendication 1, dans lequel l'alimentation du profilé dans une configuration non linéaire comprend l'enroulement du profilé autour d'un corps d'enroulement et dans lequel les contraintes restent constantes et la forme du profilé est conservée tant en section transversale qu'en rayon de courbure du profilé, au moins à l'état sans contrainte, malgré le traitement thermique et malgré l'enroulement du profilé autour du corps d'enroulement avant le traitement thermique.

22. Procédé selon la revendication 21, dans laquelle, malgré le traitement thermique et malgré le fait que le profilé présente une configuration non linéaire dans sa direction longitudinale avant et pendant le traitement thermique, la forme du profilé avant le traitement thermique est conservée à l'état naturel, relaxé ou sans contrainte après le traitement thermique.

23. Procédé selon la revendication 21 ou la revendication 22, comprenant en outre une ou plusieurs des caractéristiques énoncées dans les revendications 2 à 20.
